Europäisches Patentamt

European Patent Office

Office européen des brevets

(11) Publication number: **0 232 178 B1**

(19)

# EUROPEAN PATENT SPECIFICATION

(12)

(45) Date of publication of the patent specification:
02.05.90

(51) Int. Cl.⁴: **F16L 27/08**

(21) Application number: 87301039.1

(22) Date of filing: 05.02.87

(54) **A fitting for use in a pressurised fluid line.**

(30) Priority: 05.02.86 US 826191

(43) Date of publication of application:
12.08.87 Bulletin 87/33

(45) Publication of the grant of the patent:
02.05.90 Bulletin 90/18

(84) Designated Contracting States:
AT BE CH DE FR GB IT LI LU NL SE

(56) References cited:
DE-A- 1 650 131
DE-A- 2 001 228
DE-B- 1 267 489
FR-A- 2 133 302
US-A- 2 362 975
US-A- 2 421 974
US-A- 3 877 732

(73) Proprietor: FLOW INDUSTRIES INC., 21414-68th Avenue South, Kent Washington 98031(US)

(72) Inventor: Hashish, Mohamed, 21806 121st Place S.E., Kent Washington 98031(US)
Inventor: Olsen, John H., Route 5 Box 788, Vashon Washington 98070(US)

(74) Representative: Alexander, Thomas Bruce et al, Boult, Wade & Tennant 27 Furnival Street, London EC4A 1PQ(GB)

## Description

The present invention relates generally to a fitting for use in a pressurised fluid line for example a high pressure (over 68.95 MPa (10,000 psi)), high flow rate fluid line, the fitting having relatively rotatable adjacent line sections.

One typical prior art way of accomplishing this in high pressure, high flow rate applications is to utilise a large diameter shaft and a sealing member disposed around the outside diameter of the shaft. However, this type of approach has been found to result in high relative surface speed between the one section of the shaft and the sealing member which, in turn, tends to result in the generation of heat which exceeds the thermal capability of the seal, thereby causing the latter to fail. In addition, this type of configuration requires a relatively high driving torque to rotate one shaft section relative to the other, a larger housing to support the high internal pressure, and a large bearing to support the high thrust on the shaft (if only one seal is to be used rather than two for a balanced thrust fitting).

A way to reduce the heat and high torque problems associated with the approach described immediately above and also to significantly reduce the overall size of the fitting is to locate the seal within the fluid line itself, as illustrated in document US-A 2 421 974 (Vandervoort). This shows that the two sections of a fluid carrying line are positioned in a co-axial relationship to each other so as to define an axial joint between the two and a combination packing gasket-metal ring is disposed within the line and across the joint. However, the metal ring itself extends across the joint between the latter and the packing gasket, as best illustrated in Fig. 2 of this document. The sealing action will require that this metal ring be of precise dimensions especially on its outer diameter. The annular gap between this ring and the bores of the mating joint should be very small so that seal extrusion does not occur. As a result, the overall fitting is only capable of operating at relatively low line pressures. More specifically, if the internal pressure within the fitting becomes sufficiently large to cause the metal ring to deform outwardly, it will extrude into the joint between the two line sections and contact the bore walls of the two mating sections causing very high friction and thereby significantly hinder the rotary action of the fitting and possibly prevent the fitting from rotating altogether.

Document DE-A 1 650 131 (Nussbaum) discloses a swivel coupling comprising first and second tubular co-axial parts for connection in a fluid line by means of screw-threads. The coupling has an inner coupling sleeve which is soldered in the bore of the first tubular part and extends into the bore of second tubular part where it carries two O-rings. A bush surrounds the coupling sleeve, is screwed into the bore of the second tubular part and engages the bore of the first tubular part by means of a circlip. The central part of the bush is hexagonal for engagement by a spanner.

Document DE-A 2 001 228 (Jahndorf) discloses a tubular swivel joint comprising two tubular members held together by a retaining ring. The two tubular parts are rotatable relative to the retaining ring by means of balls, but are not rotatable relative to each other. Each tubular part has a lining, and a seal, which engages both tubular parts, is clamped between the flanges of the inner lining.

Document US-A 3 877 732 (Mohaupt) discloses a swivel coupling for high pressure fluid comprising a first member having a through passage and an aligned recess. A second body member also having a through passage, extends into the recess and is supported by the first body member for rotation relative to the first body member. A sealing member is located in a cavity of the first body member and engages in corresponding seating recesses in the first body member and the end of the second body member. In use, fluid is allowed to leak from the cavity to outside of the first body member so as to lubricate the seating surfaces for the sealing member. With increasing fluid pressure, the torque required to turn the second body member relative to the first body decreases.

Document US-A 2 362 975 (Comb) discloses a combination of a stationary hose and a nozzle mounted for rotation in the hose by means of a ball bearing. A two part seal, comprising a ring and a yieldable gasket, extends in the bore of the hose and the nozzle. The ring only allows the axial ends of the gasket to contact the respective bore surfaces to minimise frictional resistance to rotation of the nozzle.

The present invention provides a fitting for use in a pressurised fluid line, the fitting comprising:

first and second adjacent sections of the line in co-axial and unconnected relationship to each other so as to define an axial joint between the two line sections such that one section is able to rotate about its axis relative to the other section;

means supporting the first and second sections; and

a tubular sealing member disposed co-axially within the line and in the adjacent line sections, the sealing member forming an internal seal with the adjacent line sections while allowing fluid within the line to pass from one section to the other,

characterised in that the sealing member extends further into one line section than into the other line section.

Preferably, the sealing member extends further into the rotatable line section than into the other line section so that it will rotate about its own axis with the rotation of the rotatable line section without having to be bonded to it. On the other hand, if desired, the sealing member could be disposed further into the other line section so as to cause it not to rotate with the rotation of the rotatable line section, again without having to bond the sealing member in place.

Preferably the tubular sealing member is integrally formed with a sealing material which displays both sealing and bearing (low friction) characteristics, for example polytetrafluoroethylene (PTFE). Thus, the sealing member which is disposed in direct contact with the line section serves as both a seal and relatively low friction bearing surface. Moreover, if the member is caused to deform radially outwardly by internal pressure within the line, and thereby extrude between the line sections, it will not adversely affect the seal or the rotary action between the adjacent sections.

Preferably, the axial section of the sealing member is greater along a segment thereof than on either side of that segment, so reinforcing the sealing member against radially outward extrusion between the sections due to internal line pressure. The axial section of the sealing member preferably defines a venturi across the joint in the direction of fluid flow through the line, thereby minimising any drop in pressure across the joint.

Preferably, the first and second line sections are supported by a single tubular radial bearing disposed co-axially around the outside of adjacent segments of these sections. This helps to maximise co-axiality between the sections and minimise run out.

Preferably, one of the line sections is divided into at least two sub-sections, one of which does not engage any bearings forming part of the overall arrangement. That particular sub-section is one which can be readily disengaged from the other, providing access to and allowing removal of the sealing member from its operating position. In that way, the sealing member can be replaced without disturbing the bearing system.

In the accompanying drawings:

Fig. 1 is an axial sectional view of a rotary fitting which includes an in-line sealing member;

Fig. 2 diagrammatically illustrates the pressure distribution across an in-line sealing member during both leakage and non-leakage conditions;

Figs. 3, 4 and 5 are diagrammatic illustrations of different in-line sealing members;

Figs. 6, 7, 8 and 9 diagrammatically illustrate in axial section a number of rotary fittings;

Fig. 10 is a diagrammatic illustration, in axial section, of a rotary fitting which includes an in-line sealing member and a cartridge to eliminate any gap in the joint;

Fig. 11A is a side view of a cartridge forming part of the of Fig. 10, which cartridge is designed to be hydrostatically balanced:

Fig. 11B is an end view of the cartridge illustrated in Fig. 11A; and

Fig. 12 is a side view of a modified cartridge for use in the fitting of Fig. 10.

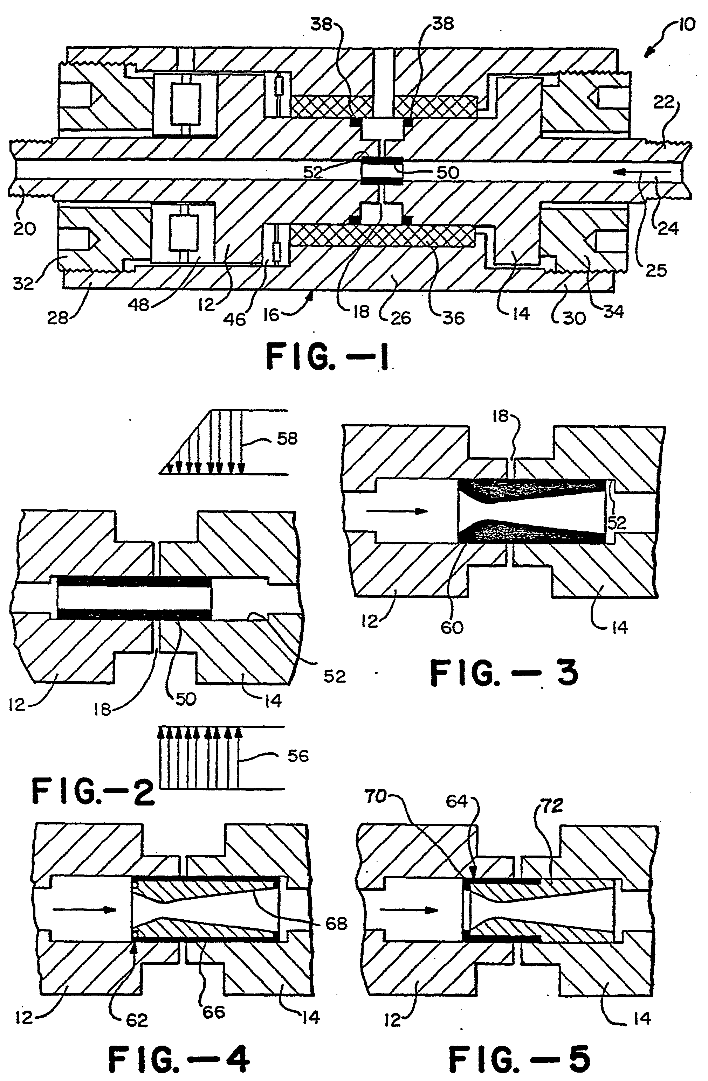

Fig. 1 illustrates a rotary fitting 10. This fitting, which is especially suitable for high pressure applications, includes first and second adjacent sections 12 and 14 which when assembled into their operating positions form part of a pressurised fluid line (not shown). A support assembly 16 to be discussed below for supports the sections 12 and 14 in a co-axial and unconnected relationship to one another so as to define an axial gap joint 18 between the two sections and such that the section 12 is able to rotate about its axis relative to the section 14. The non-confronting ends 20 and 22 of the line sections 12 and 14 are externally screw-threaded so that they can be thread connected into the line by means of co-operating internally screw-threaded end sections of the line (not shown). In that way, fluid under pressure can flow from one section to and through the other along a fluid carrying passage 24 defined by the line sections 12 and 14, as indicated for example by means of arrow 25.

The support assembly 16 includes a main coupling 26 internally screw-threaded at opposite ends 28 and 30 so as to receive externally screw-threaded end plugs 32 and 34, respectively. The coupling 26 and end plugs 32 and 34 are positioned co-axially around the line sections 12 and 14 and gap 18, as shown. A single, tubular radial bearing 36 is disposed around the outside of and directly against adjacent segments of the line sections 12 and 14 and across the axial gap joint 18 in order to support the line section 12 for rotation relative to the section 14. Because of its position across both the line sections, the radial bearing 36 aids in maximising the co-axially of the two line sections and minimises run out as the line section 12 rotates about its axis relative to the section 14.

The overall support assembly 16 includes a pair of axially spaced low pressure seal rings 38 on opposite sides of the gap 18 between the line sections 12 and 14 and the radial bearing 36. The purpose of the low pressure seal rings 38 is to keep the bearing surface free from foreign materials. Also, pre-loaded thrust bearings 46 and 48 are provided and along with the radial bearing 36 provide an overall bearing system for supporting the line section 12 for rotation. Inasmuch as the line section 14 is not designed to rotate, similar pre-loaded thrust bearings are not provided for that purpose. However, they could be so provided in order to allow the line section 14 to also rotate.

The fitting 10 also includes a deformable sealing member 50 which is integrally formed of a material which is capable of not only providing a seal across the gap 18 but also one which is capable of serving as a relatively low friction bearing surface between the seal and one of the line sections 12 or 14 depending on which rotates and whether the seal rotates or is fixed. One particular material which meets both of the requirements just recited is polytetrafluoroethylene (PTFE), although there are other suitable materials such as nylon or polyacetal resin.

The purpose of the sealing member 50 is to seal the gap 18 while at the same time allowing one of the line sections to rotate relative to the other. To minimise the pressure drop across the gap 18, the sealing member 50 is disposed within an enlarged axial section 52 of the overall fluid carrying passage 24 such that the inner diameter of sealing member 50 is at least approximately equal to the diameter of the passage 24.

The sealing member 50 is able to radially outwardly deform and thus extrude into the gap joint 18 rather than crack in response to relatively large line pressures. Should the pressure within the sealing member increase to a level which does cause it to deform and thereby extrude partially into the gap 18, the rotary capability of the fitting will not be adversely affected to a significant degree. This is because the extruded segment of the sealing member nevertheless serves as a bearing surface.

This deforming capability of the sealing member 50 also aids in eliminating leaks which occur along the outer surface of the sealing member between the passage section 52 and the gap 18. This is best illustrated by the pressure patterns within the interface between the sealing member 50 and the line sections 12 and 14 generally indicated at 56 and 58 in Fig. 2. The pressure pattern 56 represents the pressure across the seal interface when no leaks are present. The pattern 58 corresponds to the pressure across the seal interface when a leak occurs. As a result of either pattern, the bore pressure within sealing member 50 will tend to deform the seal material radially outward so as to fill the void permitting any leak and thereby close the latter.

The sealing member 50 is positioned within the passage section 52 so as to control whether or not it rotates. This is best illustrated in Fig. 2 where the sealing member is shown extending further into the line section 12 than into the line section 14. In other words, the sealing member extends further to the left of the gap 18 as viewed in Fig. 2 than to the right of the gap. As a result of this positional relationship between the sealing member and the two line sections, the sealing member will tend to rotate with the line section 12 rather than remaining stationary with line section 14, without having to bond the sealing member to the line section 12. This presupposes that the sealing member fits approximately equally tight within both of the line sections. If the sealing member were positioned further into line section 14, than into line section 12, the sealing member would remain stationary with section 14 as line section 12 rotates. In contrast to both of these extremes, if the sealing member were to extend into the two line sections equally, it could not be predicted whether it would rotate or not unless the sealing member were bonded to one or the other of the line sections. In this regard the sealing member should not be bonded in place since that makes it more difficult to remove the sealing member when the latter has to be replaced. At the same time, to be able to predict whether or not the sealing member will rotate is important in order to appropriately select the material it rotates against (or which rotates against it) so as to minimise friction between the two. For example, if the sealing member is going to rotate relative to the line section 14, the material making up this latter line section can be appropriately selected to provide a suitable bearing surface against the sealing member.

One way of preventing the sealing member from extruding into the axial joint 18 as a result of relatively high line pressures is to design the cross-sectional configuration of the sealing member so that it is thicker at the gap than on either side thereof.

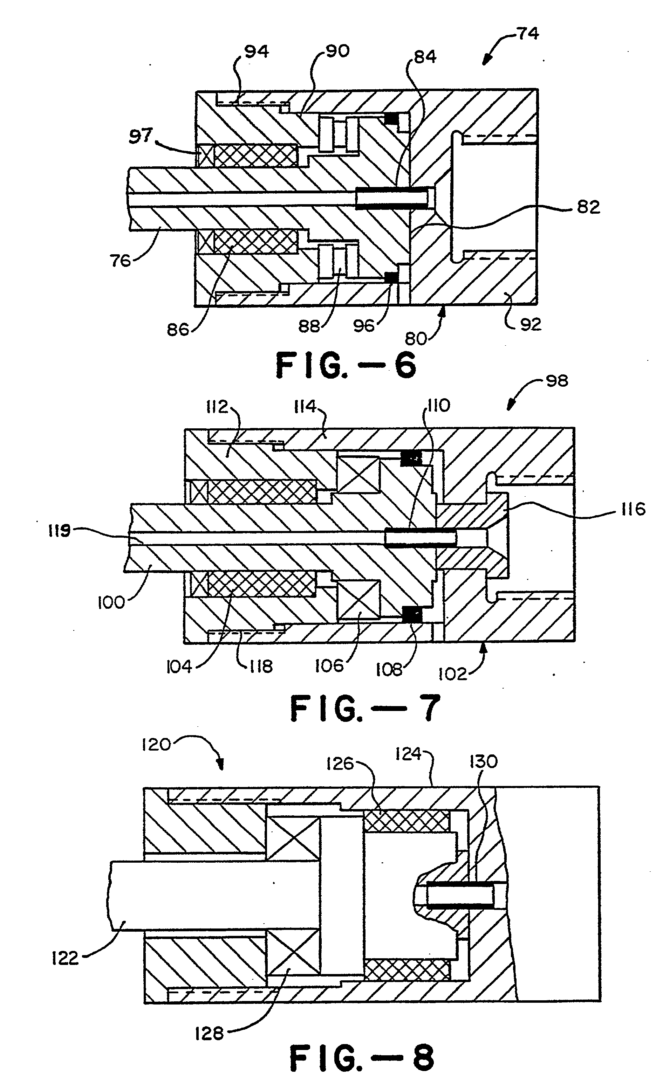

Fig. 3 shows a sealing member 60 which defines a venturi in the direction of the fluid flow through passageway 24. This provides the additional advantage of reducing the pressure drop across the gap 18 by providing pressure recovery downstream. Similar sealing member configurations 62 and 64 are illustrated in Figs. 4 and 5, respectively. The configuration 62 includes an outermost cylindrical sealing member 66 constructed of a suitable sealing and bearing material, for example the same material forming the member 50. However, the configuration also includes an inner member 68 which is harder or more rigid than the member 66 and which does not have to provide either a sealing or bearing capability. Rather, the member 68 serves to prevent internal line pressures from causing the sealing member 66 to extrude into the gap 18. The member 68 also has a venturi type of axial section to minimise the pressure drop across the gap 18. The configuration 64 is similar to the configuration 62 to the extent that it includes a sealing member 70 and a reinforcement member 72 having a venturi type axial section. However, the member 72 extends axially beyond the sealing member 70 on one side thereof. Since the overall configuration 64 is arranged for rotation with the line section 12, the member 72 does not have to have bearing capabilities.

An additional advantage to composing the seal insert as shown in Figs. 4 and 5 is to be able to reuse the sections 68 or 72 in Figs. 4 and 5 respectively. Only the sealing elements 66 or 70 which are in a simple cylindrical form need to be replaced after their useful lifetime.

Fig. 6 illustrates a rotary fitting 74 which includes co-axial and unconnected line sections 76 and 80 which together define a joint 82 and an in-line sealing member 84 extends across the joint. These line sections and the sealing member as a whole function in the same manner as the previously described sections 12 and 14 and sealing member 50 with the section 76 and the sealing member 84 being rotatable relative to the section 80. To this end, the fitting includes radial and thrust bearings 86 and 88 respectively disposed between the two line sections.

The fitting 74 differs from the previously described fitting 10 in that the line section 80 is configured so that access to the sealing member 84 can be easily gained and it can be removed from its operating position without disrupting the bearings 86 and 88. To this end, the line section 80 is comprised of two sub-sections 90 and 92 which are disengageably connected to each other by means of screwthreads 94. The sub-section 90 is disposed co-axially around the radial bearing 86 and axially against the bearing 88 while the sub-section 92 does not engage any bearings at all. At the same time, the sub-section 92 can be disengaged from the sub-section 90 so as to expose the sealing member 84 to the ambient surroundings without affecting the bearings 86 and 88. This allows the sealing member 84 to be readily accessed and replaced when and if necessary without involving the bearings at all. Low pressure sealing rings 96 and 97 are provided between the line section 76 and the sub-section 92 of the line section 80, and between the line member 76 and the sub-section 90 of the line section 80 respectively.

Fig. 7 illustrates still another rotary fitting 98 which is slightly different from the fitting 74 described immediately above. The fitting 98 includes a line section 100 intended to rotate, a co-axial unconnected line section 102, an assembly of bearings 104 and 106, a low pressure sealing ring 108 and an in-line sealing member 110. The line section 102 is made up of three sub-sections, a first sub-section 112 designed to engage the bearings 104 and 106, and two further sub-sections 114 and 116 which do not engage the bearings. The sub-section 114 is disengageably connected to the sub-section 112 by means of screw-threads 118. The sub-section 116 which is in the form of a cartridge is disposed within a co-operating opening in the sub-section 114 which receives an end segment of the sealing member 110. With the sealing member 110 positioned in the manner shown, that is, further into the line section 100 than into the cartridge 116, the sealing member is intended to rotate with the line section 100. If the passageway 119 in the line section 100 has minimum or no run out, then the cartridge 116 can be configured to float in order to achieve maximum co-axiality. Otherwise, the cartridge 116 is fixedly held within the sub-section 114. In either case, the cartridge 116 can be readily removed (or replaced) to gain access to and replace the sealing member 110 without involving the bearings 104 and 106. Another advantage of using the cartridge 116 is that it can easily be made of a wear resistant material such as tool steel, tungsten or titanium carbide due to its simple shape.

Fig. 8 illustrates a rotary fitting 120 which is similar to the fitting 74 of Figure 6 in a number of respects. More specifically, the fitting 120 includes a line section 122 corresponding to the line section 76, a two-piece line section 124 corresponding to the two piece line section 80, radial and thrust bearings 126 and 128, respectively, and a sealing member 130. However, the radial bearing 126 is positioned axially closer to the joint than the thrust bearing 128. By providing the radial bearing closer to its sealing member, run out is reduced. Also, the radial bearing 126 is mounted in the section 124.

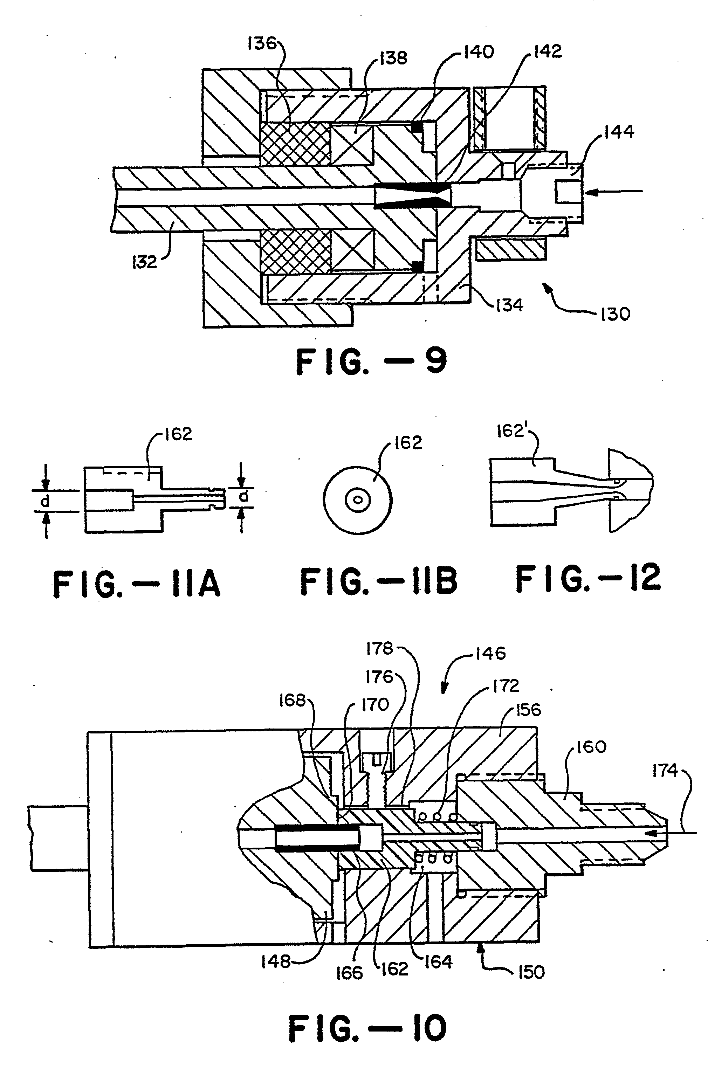

Fig. 9 illustrates a rotary fitting 130 similar in many respects to the fitting 98 illustrated in Fig. 7. Like the fitting 98, the fitting 130 includes a rotatable line section 132 corresponding to the line section 100 of the fitting 98, a multi-piece line section 134 corresponding to the line section 102, radial and thrust bearings 136 and 138 respectively, a low pressure sealing ring 140 and a sealing member 142. In addition, the fitting 130 includes a plug 144 which forms part of the multi-piece line section 134 and which is disengageably connected to the rest of that line section. By removing the plug 144, access can be gained to the sealing member 142 and it can be readily replaced without involving the bearings or any of the tubing connected to the rotary fitting 130.

In all of the fittings thus far described, none included active means to eliminate any gap at its axial joint, although all of the fittings described previously show such a configuration, except for the arrangement 10, which illustrates a gap at 18.

Fig. 10 illustrates a fitting 146 which does include positive means for ensuring no gap at its axial joint.

The fitting 146 includes a rotatable line section 148 and an unconnected, co-axial multi-piece line section 150. This latter line section includes a first sub-section 156 which, while not shown, engages the necessary bearings forming part of the fitting, and two further sub-sections 160 and 162. The sub-section 160 functions as an end plug and supports one end of the sub-section 162 for axial slidable movement to a limited extent within a co-operating cavity 164. The other end of the sub-section 162 serves to contain one end segment of a sealing member 166. The sub-section 162 has an end surface 168 which is in confronting relationship with a corresponding end surface 170 of the line section 148. The two confronting surfaces 168 and 170 together define the axial joint. The sub-section 162, which serves as a cartridge, is axially biased in the direction of the surface 170 so as to eliminate any gap within the axial joint.

The sub-section cartridge 162 is axially biased by means of a spring member 172 which is disposed co-axially around a reduced segment of the cartridge within the cavity 164 and between the larger segment of the cartridge and the end face of the plug 160. At the same time, the cartridge itself, due to is structural configuration, is hydrostatically balanced.

In order to explain how the cartridge 162 is hydrostatically balanced, reference is made to Figs. 11A and 11B. As seen in these figures, the right hand end of the cartridge has an outer diameter $d$ while the left hand end has the same inner diameter. Flow within the fitting is from right to left in Fig. 10 as indicated by arrow 174. The axial pressure forces acting on opposite ends of the cartridge are equal and opposite, thereby making the cartridge hydrostatically balanced. Referring to Fig. 10, the cartridge 162 is prevented from rotating about its axis by means of a set screw 176 disposed with a co-operating opening in the sub-section 156 and engaging in an axial extending spline 178 in the cartridge 162.

By making the cartridge 162 hydrostatically balanced, the spring force exerted by the spring member 172 will guarantee contact between the confronting surfaces 168 and 170 regardless of the line pressure within the overall fitting arrangement. This spring force will compensate for axial deflections and any gap increase due to pressurisation. The spring cavity 164 can be precharged with an adequate gas pressure to maintain higher contact force between the mating surfaces, if desired. Also, the cartridge can be configured to define an internal venturi to minimise pressure loss, as indicated by the modified cartridge 162′ illustrated in Figure 12.

The sealing members have square ends but may have angled ends. Any sealing member may include either square ends or angled ends or one of each. The sealing members can be disposed equally on either side of their respective joints. Moreover, while each sealing member has a particular axial section, it could have other sections.

**Claims**

1. A fitting for use in a pressurised fluid line, the fitting comprising:
first and second adjacent sections (12, 14) of the line in co-axial and unconnected relationship to each other so as to define an axial joint (18) between the two line sections such that one section is able to rotate about its axis relative to the other section;
means (16) supporting the first and second sections; and
a tubular sealing member (50) disposed co-axially within the line and in the adjacent line sections, the sealing member forming an internal seal with the adjacent line sections while allowing fluid within the line to pass from one section to the other, characterised in that the sealing member (50) extends further into one line section than into the other line section.

2. A fitting according to claim 1, characterised in that the sealing member (60) has an axial section which is thicker along a specific segment thereof directly adjacent to the joint (18) than along segments of the sealing member located on either side of the specific segment and spaced from the joint.

3. A fitting according to claim 1 or 2, characterised in that the sealing member (60) defines a venturi in the direction of fluid flow through the line.

4. A fitting according to any preceding claim, characterised in that the sealing material is PTFE.

5. A fitting according to any preceding claim, characterised in that a member (68) more rigid than the sealing material is located radially within and directly against the sealing member (66).

6. A fitting according to claim 5, characterised in that the more rigid member (68) has an axial section which defines a venturi in the direction of fluid flow through the line.

7. A fitting according to any preceding claim, characterised in that the supporting means includes a bearing (86, 88) which is disposed between and in contact with co-operating surfaces of the first and second line sections (76, 80), and the second line section (80) includes a first sub-section (90) providing the co-operating surface or surfaces of the second section and a second sub-section (92) disengageably connected with the first sub-section, the sub-sections being configured such that the disengagement of the second sub-section (92) from the first sub-section (90) provides access to and allows removal of the sealing member (84) for replacement thereof without having to disturb the bearing.

8. A fitting according to claim 7, characterised in that the second line section (102) includes a third sub-section (114) and only the second sub-section (116) of the second line section (102) is in direct contact with the sealing member (110) whereby disengagement of the second sub-section (116) from the third sub-section (114) provides access to and allows removal of the sealing member.

9. A fitting according to claim 8, characterised in that the sealing member (110) is disposed within the line for rotation with the first line section, (100) and the second sub-section (116) is connected with the third sub-section (114) such that the sealing member (110) rotates with the first line section relative to the second sub-section (116) while the second sub-section is free to float radially to a limited extent relative to the third sub-section (114).

10. A fitting according to any one of claims 1 to 6, characterised in that the second line section (150) includes a first sub-section (156), a second sub-section (162) located radially within and movable axially relative to the first sub-section (156), and a spring (172) biasing the second sub-section (162) in the direction towards the first line section (148) such that the co-operating surfaces together define the joint, the second sub-section (162) being disposed in direct contact with the sealing member (166) and having a radially extending surface (168) in confronting relationship with a co-operating surface (170) of the first line section (148).

11. A fitting according to claim 10, characterised in that the second sub-section (162) is configured to be hydrostatically balanced as a result of the internal pressure within the line.

12. A fitting according to any preceding claim, characterised in that the supporting means includes both radial and axial bearings (126, 128), the radial bearing (126) being positioned axially closer to the adjacent ends of the line sections than the axial bearing (128).

13. A fitting according to any one of claims 1 to 11, characterised in that the supporting means includes a single, tubular radial bearing (36) disposed co-axially around the outside of adjacent segments of the first and second line sections (12, 14) and the joint.

## Patentansprüche

1. Anschlußstück zum Einsatz in einer unter Druck stehenden Fluidleitung.
mit einem ersten und einem zweiten angrenzenden Abschnitt (12, 14) der Leitung, die in koaxialer und miteinander unverbundener Beziehung stehen, so daß eine axiale Verbindungsstelle (18) zwischen den beiden Leitungsabschnitten derart gebildet wird, daß ein Abschnitt sich um seine Achse relativ zum anderen Abschnitt drehen kann,
Einrichtungen (16), die den ersten und den zweiten Abschnitt halten, und
mit einem rohrförmigen Dichtungselement (50), das koaxial in der Leitung und in den angrenzenden Leitungsabschnitten angeordnet ist, wobei das Dichtungselement eine innere Dichtung mit den angrenzenden Leitungsabschnitten bildet und dabei ermöglicht, daß Fluid in der Leitung von dem einen Abschnitt zum anderen gelangen kann, dadurch gekennzeichnet, daß sich das Dichtungselement (50) in einen Leitungsabschnitt weiter als in den anderen Leitungsabschnitt erstreckt.

2. Anschlußstück nach Anspruch 1, dadurch gekennzeichnet, daß das Dichtungselement (60) einen axialen Abschnitt hat, der längs eines spezifischen Segments direkt angrenzend an die Verbindungsstelle (18) dicker ist, als längs Segmenten des Dichtungselements, die auf jeder Seite des spezifischen Segments und im Abstand von der Verbindungsstelle positioniert sind.

3. Anschlußstück nach Anspruch 1 oder 2, dadurch gekennzeichnet, daß das Dichtungselement (60) in Richtung des Fluidstroms durch die Leitung einen Venturiabschnitt bildet.

4. Anschlußstück nach einem vorhergehenden Anspruch, dadurch gekennzeichnet, daß das Dichtungsmaterial PTFE ist.

5. Anschlußstück nach einem vorhergehenden Anspruch, dadurch gekennzeichnet, daß ein Element (68), das steifer als das Dichtungsmaterial ist, radial in dem Dichtungselement (66) und direkt daran angeordnet ist.

6. Anschlußstück nach Anspruch 5, dadurch gekennzeichnet, daß das steifere Element (68) einen axialen Abschnitt hat, der einen Venturiabschnitt in der Richtung des Fluidstroms durch die Leitung bildet.

7. Anschlußstück nach einem vorhergehenden Anspruch, dadurch gekennzeichnet, daß die Halteeinrichtung ein Lager (86, 88) aufweisen, das zwischen und in Kontakt mit den zusammenwirkenden Oberflächen des ersten und zweiten Leitungsabschnitts (76, 80) angeordnet ist, und daß der zweite Leitungsabschnitt (80) einen ersten Unterabschnitt (90), der die zusammenwirkende Oberfläche oder die zusammenwirkenden Oberflächen des zweiten Abschnitts bildet, und einen zweiten Unterabschnitt (92) aufweist, der lösbar mit dem ersten Unterabschnitt verbunden ist, wobei die Unterabschnitte so gestaltet sind, daß das Lösen des zweiten Unterabschnitts (92) von dem ersten Unterabschnitt (90) einen Zugang zu dem Dichtungelement (84) und dessen Enfernen für den Austausch ermöglicht, ohne daß die Lagerung gestört werden muß.

8. Anschlußstück nach Anspruch 7, dadurch gekennzeichnet, daß der zweite Leitungsabschnitt (102) einen dritten Unterabschnitt (114) aufweist und daß nur der zweite Unterabschnitt (116) des zweiten Leitungsabschnitts (102) in direktem Kontakt mit dem Dichtungselement (110) steht, wodurch ein Lösen des zweiten Unterabschnitts (116) von dem dritten Unterabschnitt (114) einen Zugang zu dem Dichtungelement und dessen Entfernen ermöglicht.

9. Anschlußstück nach Anspruch 8, dadurch gekennzeichnet, daß das Dichtungselement (110) in der Leitung für eine Rotation mit dem ersten Leitungsabschnitt (100) angeordnet ist und daß der zweite Unterabschnitt (116) mit dem dritten Unterabschnitt (114) derart verbunden ist, daß sich das Dichtungselement (110) mit dem ersten Leitungsabschnitt relativ zu dem zweiten Unterabschnitt (116) dreht, während der zweite Unterabschnitt bis zu einem begrenzten Ausmaß bezüglich des dritten Unterabschnitts (114) radial frei schwimmen kann.

10. Anschlußstück nach einem der Ansprüche 1 bis 6, dadurch gekennzeichnet, daß der zweite Leitungsabschnitt (150) einen ersten Unterabschnitt (156), einen zweiten Unterabschnitt (162), der radial innerhalb des ersten Unterabschnitts (156) und axial relativ dazu beweglich angeordnet ist, und eine Feder (172) aufweist, die den zweiten Unterabschnitt (162) in Richtung zum ersten Leitungsabschnitt (148) derart vorspannt, daß die zusammenwirkenden Oberflächen zusammen die Verbindungsstelle bilden, wobei der zweite Unterabschnitt (162) in direktem Kontakt mit dem Dichtungselement (166) angeordnet ist und eine sich radial erstreckende Oberfläche (168) in gegenüberstehender Beziehung zu einer zusammenwirkenden Oberfläche (170) des ersten Leitungsabschnitts (148) aufweist.

11. Anschlußstück nach Anspruch 10, dadurch gekennzeichnet, daß der zweite Unterabschnitt (162) so gestaltet ist, daß er infolge des Innendrucks in der Leitung hydrostatisch im Gleichgewicht steht.

12. Anschlußstück nach einem vorhergehenden Anspruch, dadurch gekennzeichnet, daß die Halteeinrichtungen sowohl radiale als auch axiale Lager (126, 128) aufweisen, wobei das radiale Lager (126) zu den angrenzenden Enden der Leitungsabschnitte axial näher positioniert ist als das axiale Lager 128.

13. Anschlußstück nach einem der vorhergehenden Ansprüche 1 bis 11, dadurch gekennzeichnet, daß die Halteeinrichtungen ein einziges rohrförmiges Radiallager (36) aufweisen, das koaxial um die Außenseite der angrenzenden Segmente des ersten und des zweiten Leitungsabschnitts (12, 14) und die Verbindungsstelle angeordnet ist.

**Revendications**

1. Raccord à utiliser dans une conduite de fluide sous pression, le raccord comprenant:
des première et seconde parties adjacentes (12, 14) de la conduite dans une disposition coaxiale et non raccordée entre elles, afin de définir un joint axial (18) entre les deux parties de conduite de manière qu'une partie puisse tourner autour de son axe par rapport à l'autre partie;
des moyens (16) supportant les première et seconde parties; et
un élément tubulaire (50) d'étanchéité disposé coaxialement à l'intérieur de la conduite et dans les parties de conduite adjacentes, l'élément d'étanchéité formant un joint d'étanchéité intérieur avec les parties de conduite adjacentes, tout en permettant à un fluide se trouvant dans la conduite de passer d'une partie à l'autre,
caractérisé en ce que l'élément d'étanchéité (50) s'étend davantage à l'intérieur d'une partie de la conduite qu'à l'intérieur de l'autre partie de la conduite.

2. Raccord selon la revendication 1, caractérisé en ce que l'élément d'étanchéité (60) présente une section axiale qui est plus épaisse le long d'un segment spécifique de cet élément, directement adjacent au joint (18), que le long de segments de l'élément d'étanchéité situés de chaque côté du segment spécifique et espacés du joint.

3. Raccord selon la revendication 1 ou 2, caractérisé en ce que l'élément d'étanchéité (60) définit un venturi dans la direction d'écoulement du fluide dans la conduite.

4. Raccord selon l'une quelconque des revendications précédentes, caractérisé en ce que la matière d'étanchéité est du PTFE.

5. Raccord selon l'une quelconque des revendications précédentes, caractérisé en ce qu'un élément (68) plus rigide que la matière d'étanchéité est placé radialement à l'intérieur et directement contre l'élément d'étanchéité (66).

6. Raccord selon la revendication 5, caractérisé en ce que l'élément plus rigide (68) présente une section axiale qui définit un venturi dans la direction d'écoulement du fluide dans la conduite.

7. Raccord selon l'une quelconque des revendications précédentes, caractérisé en ce que les moyens de support comprennent un palier (86, 88) qui est disposé entre des surfaces coopérantes des première et seconde parties (76, 80) de la conduite et en contact avec ces surfaces, et la seconde partie (80) de la conduite comprend une première sous-partie (90) présentant la surface ou les surfaces coopérantes de la seconde partie et une seconde sous-partie (92) raccordée à la première sous-partie de façon à pouvoir en être dégagée, les sous-parties étant configurées de façon que le fait de dégager la seconde sous-partie (92) de la première sous-partie (90) donne accès à l'élément d'étanchéité (84) et permette de l'enlever pour le remplacer sans avoir à déplacer le palier.

8. Raccord selon la revendication 7, caractérisé en ce que la seconde partie (102) de la conduite comprend une troisième sous-partie (114) et seule la deuxième sous-partie (116) de la seconde partie (102) de la conduite est en contact direct avec l'élément d'étanchéité (110), de manière que le fait de dégager la deuxième sous-partie (116) de la troisième sous-partie (114) donne accès à l'élément d'étanchéité et permette de l'enlever.

9. Raccord selon la revendication 8, caractérisé en ce que l'élément d'étanchéité (110) est disposé à l'intérieur de la conduite afin de tourner avec la première partie (100) de la conduite, et la deuxième sous-partie (116) est reliée à la troisième sous-partie (114) de manière que l'élément d'étanchéité (110) tourne avec la première partie de la conduite par rapport à la deuxième sous-partie (116) tandis que la deuxième sous-partie peut flotter librement radialement à un degré limité par rapport à la troisième sous-partie (114).

10. Raccord selon l'une quelconque des revendications 1 à 6, caractérisé en ce que la seconde partie (150) de la conduite comprend une première sous-partie (156), une deuxième sous-partie (162) située radialement à l'intérieur de et mobile axialement par rapport à la première sous-partie (156), et un ressort (172) rappelant la deuxième sous-partie (162) en direction de la première partie (148) de la conduite de manière que les surfaces coopérantes définissent ensemble le joint, la deuxième sous-partie (162) étant disposée en contact direct avec l'élément d'étanchéité (166) et présentant une surface (168) s'étendant radialement, faisant face à une surface coopérante (170) de la première partie (148) de la conduite.

11. Raccord selon la revendication 10, caractérisé en ce que la deuxième sous-partie (162) est configurée de façon à être hydrostatiquement équilibrée par suite de la pression interne dans la conduite.

12. Raccord selon l'une quelconque des revendications précédentes, caractérisé en ce que les moyens de support comprennent des paliers à la fois radial et axial (126, 128), le palier radial (126) étant disposé de façon à être plus près axialement des extrémités adjacentes des parties de la conduite que le palier axial (128).

13. Raccord selon l'une quelconque des revendications 1 à 11, caractérisé en ce que les moyens de support comprennent un palier radial tubulaire unique (36) disposé coaxialement autour de l'extérieur de segments adjacents des première et seconde parties (12, 14) de la conduite et du joint.

FIG. —1

FIG. — 3

FIG. —2

FIG. —4

FIG. — 5

**FIG. — 6**

**FIG. — 7**

**FIG. — 8**

136  138  140  142

144

132  134  130

# FIG. — 9

162

162

162'

d  d

# FIG. — 11A

# FIG. — 11B

# FIG. — 12

178  146
176  172
168  170  156
160
174

148  166  162  164  150

# FIG. — 10